Europäisches Patentamt

European Patent Office

Office européen des brevets

(11) Publication number: **0 324 871**
**A1**

## (12) EUROPEAN PATENT APPLICATION

(21) Application number: 88100658.9

(22) Date of filing: **19.01.88**

(51) Int. Cl.⁴: **C09C 1/36 , C22B 34/12 , C01G 23/047**

(43) Date of publication of application:
**26.07.89 Bulletin 89/30**

(84) Designated Contracting States:
**BE DE ES FR GB IT NL SE**

(71) Applicant: **THE DOW CHEMICAL COMPANY**
**2030 Dow Center Abbott Road P.O. Box 1967**
**Midland Michigan 48640-1967(US)**

(72) Inventor: **Heikel, Henrik R.**
**506 South Grand Avenue**
**Leland Michigan 49654(US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2(DE)**

(54) **Process for preparing pigmentary titanium dioxide.**

(57) A process for preparing pigmentary titanium dioxide by grinding and mixing a titanium-bearing material, such as sorelslag, with an alkali metal compound, such as sodium hydroxide, and roasting the mixture. The roasted material is sandmilled followed by washing and filtering. Thereafter, the solid residue is digested with hydrochloric acid. After removing the acid by filtration and washing, the solid residue is calcined to provide a titanium dioxide pigment. By employing the proper process conditions, the process of the invention is capable of producing either nodular or acicular titanium dioxide pigment.

EP 0 324 871 A1

## PROCESS FOR PREPARING PIGMENTARY TITANIUM DIOXIDE

This invention relates to a process for preparing pigmentary titanium dioxide from titanium dioxide-bearing materials. More particularly, it is desired to provide a simplified and relatively less expensive process for preparing a $TiO_2$ pigment whereby the titanium values in titanium dioxide-bearing materials or ores are not solubilized or converted to a vaporizable liquid compound, but are separated, through solid-liquid reactions, from the ore's impurities and mechanically comminuted to pigmentary size.

The process provides a means of obtaining a $TiO_2$ pigment which has either a nodular or an acicular particle shape.

Titanium dioxide ($TiO_2$) is a well-known opacifying pigment useful in paint and coating compositions, in plastic materials and as a filler in paper and other materials. Various known processes for producing $TiO_2$ include, for example, conventional processes commonly referred to as the "sulphate" process and the "chloride" process.

The "sulphate" process involves solubilizing the titanium values in low grade titanium ores, such as ilmenite or sorelslag, with concentrated sulfuric acid and meticulously removing ferrous sulfate formed in the process. This is followed by precipitation, washing, and calcining to form pigmentary $TiO_2$.

The "chloride" process involves volatilizing, as tetrahalide, the titanium values in high grade titanium ores, such as Australian rutile (containing about 95 percent $TiO_2$) or highly beneficiated ilmenite. This is followed by purification and oxidation.

The sulphate and chloride processes are very complex and capital intensive which accounts for the relatively costly product of $TiO_2$ pigment made by such processes.

The present invention is therefore directed to a process for preparing a titanium dioxide pigment comprising the steps of:

(a) comminuting a titanium dioxide-bearing material selected from sorelslag, beneficiated ilmenite and chloride slag to a particle size of less than 10 microns;

(b) mixing the titanium dioxide-bearing material with an alkali metal compound selected from alkali metal hydroxide, alkali metal carbonate, and alkali metal oxide;

(c) roasting the mixture at a temperature of from 700°C to 900°C;

(d) digesting the roasted material in hydrochloric acid; and

(e) calcining the solid product formed in the digestion step at a temperature of from 800°C to 1000°C to form a titanium dioxide pigment.

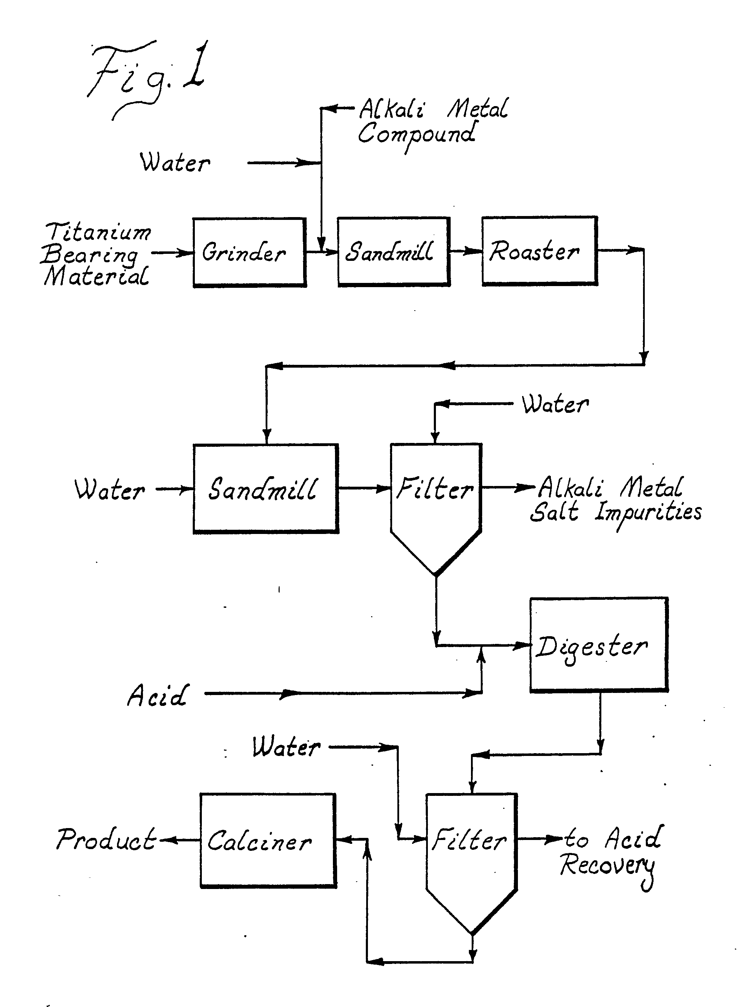

Figure 1 is a schematic flow diagram of one manner in which the process of the present invention can be carried out.

The starting material for the process of the present invention is a titanium-bearing material, for example, sorelslag. Various grades of sorelslag may be used in the present process. For example, the composition of one typical grade of sorelslag, expressed as oxides, may consist of approximately 70 weight percent $TiO_2$ and approximately 11 weight percent FeO as an impurity with the remainder being impurities including, for example, CaO, MgO, $SiO_2$, $Al_2O$, MnO, $V_2O_5$, $Cr_2O_3$ and other oxides as trace impurities. Another grade of sorelslag useful in the present process may consist of approximately 78 weight percent $TiO_2$, approximately 8 weight percent FeO as an impurity, and the remainder impurities such as those listed above.

It is to be understood that the present invention is not limited to sorelslag. Other titanium-bearing materials or ores as starting materials for the present invention are within the scope thereof. For example, "chloride slag" may also be used in the process of the present invention. A typical chloride slag may consist of approximately 85 weight percent $TiO_2$, approximately 10 weight percent FeO as an impurity and the remainder impurities such as those listed above.

Another suitable raw material for the process of the present invention can be an intermediate product formed during a beneficiation process of ilmenite such as that described in U.S. Patent No. 3,825,419. A typical raw material formed during the beneficiation process above may consist of approximately 95 weight percent $TiO_2$, approximately 1 weight percent FeO as an impurity and the remainder impurities such as those listed above.

Examples of other titanium bearing materials which can be used in the process according to the present invention are any titanium-bearing materials which are so treated that the titanium dioxide portion thereof becomes reactive with an alkali metal compound when heated at to a temperature of from 700°C to 950°C. An alkali metal compound, as used herein includes, for example, an alkali metal hydroxide, an alkali metal carbonate, or an alkali metal oxide or mixtures thereof.

All of the equipment used in the process of the present invention for grinding, mixing, roasting, filtering and calcining and all other operations are carried out by conventional equipment suitable for the purpose of continuous or batch type operation. For comminuting the titanium bearing starting material to micron size it is preferred to use "sandmills" of the type described and illustrated, for example, in U.S. Patent No. 2,581,414. A "sandmilling" process will refer herein to a process of grinding a material to micron particle size using the type of equipment described and illustrated, for example, in U.S. Patent No. 2,581,414. However, the grinding media used in such equipment is not limited to sand, but can be glass, steel, ceramic or any other suitable grinding media having a spherical or bead shape, generally, in the range of from 0.5 to 3 millimeters in diameter.

The digesting step has to be carried out in vessels with inner surface portions or linings resistant, under normal operating conditions, to the acid utilized in the process. Suitable materials for such surface portions are, for example, glass, FRP (glass fiber reinforced polymeric composites), polyester, vinylester, epoxy and other suitable plastics, Hasteloy (Ni/Mo alloy), rubber, refractory metals (Ta, Zr, Cb) or acid resistant brick.

According to a preferred embodiment of the present invention, the particle size of the titanium bearing material should be small enough for all or substantially all of the material to react with an alkali metal compound. With reference to Figure 1, the titanium bearing starting material is first ground, for example, by hammermilling to a size suitable for sandmilling. Hereinafter, the process of the present invention will be described with reference to sorelslag as the titanium bearing material but, as aforementioned, the material is not limited to sorelslag.

After the hammermilling step, the sorelslag is preferably sandmilled to an average particle size of about 15 microns , more preferably, a particle size of about 10 microns. Even more preferably, the starting material may be sandmilled to a maximum particle size of 10 micron or less. Particles larger than about 15 microns may occlude impurities which may not be readily removed from the starting material in the subsequent process steps of the present invention.

After the sorelslag is ground to the preferred particle size, it is intimately mixed with an alkali metal compound such as, for example, an alkali metal hydroxide, an alkali metal carbonate, an alkali metal oxide or mixtures thereof. Alkali metals such as sodium, potassium, lithium, rubidium, cesium or mixtures thereof may be used. The preferred compound is an alkali metal hydroxide, and more preferably, sodium hydroxide because it is readily reactive with the finely ground sorelslag material. Hereinafter, the process of the present invention will be described with reference to sodium hydroxide as the preferred alkali metal compound but it is understood that the present invention is not limited thereto.

Sodium hydroxide may be mixed with the sorelslag material prior to roasting and preferably during the sandmilling step above or, alternatively, prior to the sandmilling step. The mixture of sorelslag and sodium hydroxide can contain about 30 parts by weight (pbw) or above of sodium hydroxide to 100 pbw of sorelslag. Preferably, from 30 to 60 pbw of sodium hydroxide to about 100 pbw of sorelslag is used. More preferably, the ratio by weight of sorelslag to sodium hydroxide is from 100:35 to 100:45. Using a ratio of sorelslag to sodium hydroxide above or below the range of from 100:30 to 100:60 is operable, however, it may result in an unsatisfactory $TiO_2$ pigmentary product. When a material bearing a higher than 70 weight percent $TiO_2$ content is used, the hydroxide portion of the mixture is increased accordingly.

After the sandmilling step, the mixture of sorelslag and sodium hydroxide is heated or roasted at temperatures of from 700°C to 950°C for a length of time of from 1 to 3 hours. At roasting temperatures above 950°C a hard material or clinker may result, and below 700°C the reaction between the sodium hydroxide and sorelslag may not be complete. It is, therefore, preferred to roast the mixture at a temperature of from 800°C to 870°C for 1½ to 2 hours. Preferably, the roasted mixture is subsequently ground to a particle size of from 0.5 to 2 microns. As mentioned above, fine particles will enhance the removal of impurities during subsequent treatment of the roasted material.

During the roasting step, it is believed that the $TiO_2$ contained in the mixture reacts with the sodium hydroxide forming a sodium titanate. Some of the impurities in the material may also react with the particular hydroxide used to form an alkali metal salt, leaving them in an extractable form. For example, when sodium hydroxide is used, the impurities in their alkali metal salt form include sodium vanadate, sodium chromate, sodium aluminate and sodium silicate, which are readily soluble in water. These impurities are therefore preferably at least partially dissolved in water by washing, after the roasting step, to reduce, or more preferably, substantially entirely remove deleterious amounts of the impurities. Other compounds present in the starting material such as iron oxide, magnesium oxide and calcium oxide are soluble in mineral acids, such as hydrochloric acid (HCl), and are removed during the digestion step as discussed below.

After the water soluble impurities are washed off or dissolved from the roasted material, the remaining insoluble alkali metal titanate with additional insoluble oxides is digested in hydrochloric acid. It is preferred to use about 6 normal (N) HCl acid because a much weaker acid is not as effective as about 6 N. A

3

stronger acid may be effectively used in a pressurized container but tends to approach 6 N when boiled in a vessel open to the atmosphere. It is therefore entirely within the scope of the present invention to use acid concentra-tions of from as low as 5 N to as high a concentration as 12 N. However, when the concentration exceeds 6 N (which is the HCl azeotrope boiling at 108° C) a pressure vessel is required. It is therefore more practical to operate at atmospheric pressure.

At standard atmospheric pressure, the digestion step can be carried out at 80° C or above and preferably under reflux at a temperature of from 90° C to 110° C, and more preferably at 108° C, for a length of time ranging from 10 to 120 minutes, preferably from 10 to 40 minutes. Higher temperatures can be used, however, pressurized equipment may be necessary. The digestion step above may be carried out one or more times, however, it is preferred to carry out the digestion step at least two times.

A nodular or an acicular $TiO_2$ particle shape is obtained depending on how long time the roasted material (sodium titanate) dwells in 6 N HCl at a temperature below about 90° C. When the 6 N acidic suspension in the digestion step is heated slowly (less than 5° C/min) to its boiling point of 108° C, the process yields an essentially nodular $TiO_2$. An acicular particle shape results from raising the temperature of the digestion mixture very fast or by using an acid concentration below 4 N in the heating step and increasing the acidity to 6 N when the temperature has exceeded 90° C.

In a preferred embodiment of the present invention, the roasted material is mixed with HCl at room temperature (i.e., from 20° C to 30° C). The roasted material/acid mixture is then heated, slowly, up to the boiling point of the acid at a rate of about 5° C/minute or less, preferably from 2° C/min. to 3° C/min., and more preferably at 2° C/min. or less. It is believed that the nodular sodium titanate material is formed during the digestion step.

In either case, for obtaining a nodular or an acicular particle shape, the suspension of the washed roasted material in the about 6 N HCl is boiled with reflux for a length of time to substantially complete the digestion step. The boiling point, which varies with prevailing pressure, is in the range of 90° C to 111° C and preferably about 108° C. The digestion is substantially complete in from 10 to 15 minutes. Digestion times of up to about 120 minutes can be used but preferably the digestion time is from 10 to 40 minutes. Higher heating rates and time may be used, however, pressurized equipment may be necessary.

During the digestion step, the alkali metal titanate formed is believed to hydrolyze into amorphous hydrous $TiO_2 \cdot nH_2O$ and the iron oxides solubilize as ferrous and ferric chloride. The iron chlorides and other impurities in the acid suspension are removed by, for example, centrifugation or filtration and, optionally, disposed of or further treated to recover unreacted acid. The insoluble amorphous titanium dioxide residue is washed with a fluid such as water to further remove soluble impurities. Thereafter, the $TiO_2$ is recovered from the water by, for example, filtering or centrifuging. A white residual cake results after this step is carried out.

The iron impurities in the $TiO_2$ pigment are believed to be the cause of a non-white pigment. Preferably the $TiO_2$ pigment contains less than 520 ppm Fe and more preferably less than 200 ppm.

The amorphous $TiO_2$ is calcined, preferably, for 30 to 60 minutes at temperatures ranging from 800° C to 1000° C to convert the $TiO_2$ to its crystalline rutile form. More preferably, a temperature of from 875° C to 925° C for 30 minutes to one hour is employed, because undesirable discoloration of the resulting pigment is minimized and lower temperatures are not as effective in converting the product into its desirable crystalline form.

If the crystalline rutile product, which is either acicular or nodular in shape, obtained after calcination is severely agglomerated, it may be pulverized or sandmilled. The final particle size for the acicular version is from 0.05 to 0.3 micron in thickness and from 0.1 to 1.0 micron in length, preferably of about 0.2 micron in thickness and about 0.7 micron in length. Its value as an opacifier is dictated by a narrow optimum size range.

When the crystalline rutile product is nodular in shape, the $TiO_2$ particle has an average particle size of less than about 1 micron and preferably about 0.3 micron.

The $TiO_2$ product can be used as a pigment in any of the typical applications for which opacifying pigments are used. As an illustration only and not to limit the scope of the the present invention, the $TiO_2$ pigment obtained from the process of the present invention can be used as an opacifier in paint, paper or plastics. The opacifying power and brightness of the product is determined by measuring its light scattering coefficient and reflectance. Pigment obtained by the process of this invention desirably has a light scattering coefficient of above 2000 cm²/g, preferably above 4000 cm²/g, and more preferably above 9000 cm² g, and a brightness of above 80 percent and preferably from 85 percent to 93 percent when measured in accordance to the method described in Examples 1 and 12.

The examples which follow are illustrative of the present invention but the present invention ought not to be limited thereby.

Example 1

A 600 gram (g) sample of hammermilled sorelslag ore, about 75 micrometers (μm), with approximately 70 weight percent $TiO_2$ and approximately 30 weight percent impurities was dispersed in 450 milliliters (ml) of water. The sorelslag in suspension was sandmilled with 800 ml of 1.5 millimeters (mm) diameter steelshot for 120 minutes (min.) at 1000 revolutions per minute (rpm). The sandmill used was a vertical water-cooled laboratory sandmill constructed of stainless steel having a cylindrical grinding vessel with an inside diameter of 11.5 centimeters (cm) and a height of 19 cm; a shaft, driven by an air turbine, and two 8.5 cm diameter polyurethane disc impellers 4 cm apart. The peripheral velocity of the impellers was 4.4 meters per second (m/s). Speed was controlled with an optical tachometer. At completion of the sandmilling, the top size of the sorelslag particles was about 10 μm, the average size being about 5 μm. After the steelshot was removed from the slag suspension by screening through a screen having openings of 0.5 mm, 240 g of anhydrous sodium hydroxide (NaOH) was added to the slag suspension and then thoroughly mixed. The mixture, having a sorelslag/NaOH ratio of 100/40, was then evaporated to dryness in air in a shallow dish at 120° C. To break up any agglomerates formed after drying and obtain a homogeneous mixture, the dried material was hammermilled using a Weber Brothers Lab Mill S-500. The resulting fine powder was roasted in air in porcelain crucibles for 2 hours at a temperature of 820° C. A 150 g sample of the roasted material was pulverized in a mortar to remove any lumps formed after roasting and dispersed in 350 ml water. The roasted material and water was sandmilled with 700 ml of 1.2 mm diameter glass beads for 30 minutes at 1000 rpm. Glass beads were used in this sandmilling step instead of steelshot to avoid discoloration of the material caused by steelshot.

After removing the beads by screening, the sandmilled roasted material and water dispersion was centrifuged. The solid residue formed after centrifugation (solids) was washed by redispersing in water and recentrifuging. The washing was repeated twice.

The solids were then dispersed in 1000 ml of (about 100° C) 6 N HCl acid and boiled at a temperature of about 108° C in an open beaker while agitating with a magnetic stirrer for 90 minutes. The acidic liquor containing the solids was centrifuged. The solids were washed with water twice and dried in air at 120° C. The dried solids were then calcined for 1 hour at 900° C.

The density of the resulting white calcined product was 4.14 g/cm and X-ray diffraction analysis showed the calcined product had a rutile structure. Electron transmission. microscopy revealed pigmentary grade $TiO_2$ particles with an acicular shape. The particle size of the acicular pigment ranged from 0.05 to 0.3 μm thick and from 0.1 to 1.0 μm long.

The brightness (R∞) of the pigment was 88.4 percent based on the measurement of light reflectance of a fumed magnesium oxide surface having a 100 percent reflectance, and its scattering coefficient (S) was 6,835 square centimeters per gram ($cm^2$/g). The iron (Fe) content of the pigment was determined by X-ray fluorescence and found to be 520 parts per million (ppm).

Determining Scattering Coefficient (S) and Brightness (R∞)

The primary function of a $TiO_2$ pigment is to provide opacity to a material, such as paint, paper, plastics, etc., in which it is incorporated as a uniform dispersion. Of the many modes used for expressing a pigment's opacifying power, the term scattering coefficient is particularly meaningful and can be easily determined accurately and reproducibly.

The principle of this test is to make a thin film of the pigment over a black plate glass so that the film is slightly translucent, i.e., has a reflectance of about 80 to 90 percent of that of the reflectance of a thick, completely opaque film. Another film of the same dispersion is applied on a white glass plate and made so thick that a further increase in thickness does not change its light reflectance. When the reflectances of these two films (R and R∞), respectively, are measured and the weight (W) of the film coating over the black plate is determined (weight of dry film per unit area, g/$cm^2$), the scattering coefficient S ($cm^2$/g) can be calculated using the Kubelka-Munk Theory of light scattering (Zeitschrift. fur Tech. Physik, 12, 593, 1931). The reflectance measurement of the film over the white glass, R∞, is often referred to as brightness. Tables, based on Kubelka-Munk equations are found in an article by Mitton-Jacobsen, "New Graphs for Computing Scattering Coefficient and Hiding Power," Official Digest, September, 1963, pages 871-913. Using the tables of the above article, S can be easily computed knowing R, R∞, and W. Example A, below, further illustrates a method of determining S.

Example A

A pigment is dispersed in water and a small amount of binder is added which as a film former makes a coherent film when the dispersion is cast on glass plates for reflectance measurements. Since the opacity of the film is very sensitive to the volume ratio of pigment to binder, this ratio must be kept accurately constant and at high enough level at which the opacifying power of the pigment is not appreciably depressed by the presence of binder. Tests are run at pigment volume concentration (pvc) of 70.00 percent (pigment's volume = 70.00 percent of total solids volume and total solids volume = pigment volume + binder volume) and at low enough solids content so that the film, when cast with a 37 $\mu$m applicator on black glass will be slightly translucent (having a reflectance of about 80-90 percent of that of the reflectance of a thick, completely opaque film of the same dispersion). A solids volume of about 4 percent is a suitable level for $TiO_2$ dispersions (pigment volume + binder volume = 4 percent of total volume of dispersion). An example of a film composition with $TiO_2$ pigment for testing S and R∞, is described in Table A below:

## TABLE A

| | Grams Weight | g/ml Density | ml Volume of Solids | ml Volume of Dispersion |
|---|---|---|---|---|
| TiO$_2$ pigment sample | 15.00 | 4.20 | 3.57 | 3.57 |
| Nalco 2324 Dispersant[1] | 0.50 | 1.00 | | 0.50 |
| Dispersant Binder (50.1% solids by weight)[2] | 3.06 | 1.04 | 1.53 | 3.11 |
| Water | 120.32 | 1.00 | ____ | 120.32 |
| | 138.88 | | 5.10 | 127.50 |

[1]An anionic polyacrylate dispersant, sold under the trade name "Nalco® 2324" by Nalco Chemical Company.

[2]A carboxylated styrene-butadiene latex sold under the trade name "Dow Latex 620A" by The Dow Chemical Company.

In the above composition the pvc = 70.00 percent and solids volume of dispersion solids = 4.00 percent.

The pigment, water and dispersant is mixed for 5 minutes with a homogenizer sold under the trade name "PT 45/80 Brinkmann Homogenizer" by Brinkmann Instruments Company, at speed setting 4. Then Dow Latex 620 is added and the mixture is stirred at speed setting 2 for 5 minutes.

A Bird Film Applicator, commercially available from Gardner Laboratory, a Division of Pacific Scientific Company, having a width of 15 cm and a gap of 0.037 mm is placed on the top edge of an 50 x 50 cm black glass plate (reflectance = 0) and about 3 ml of the dispersion is put in front of the applicator. The applicator is drawn down on a glass plate uniformly with an even speed. The film is allowed to dry at room temperature in a horizontal position. Using a Bird applicator with a gap of 75 $\mu$m, the same dispersion is drawn down on a white glass plate (reflectance = 85.6).

After the films are allowed to dry for about 2 hours, a 5 x 6.25 cm rectangular template, having an area of 32 cm$^2$, is placed over the film on the black plate and the coating outside the template is removed with a razor blade leaving a 32 cm$^2$ rectangular patch on the black plate. Next, a Photovolt reflectometer equipped with an external digital voltmeter and a search unit with a blue filter, having a wavelength of 457 nanometers and sold under the trade name Wratten filter by Eastman Kodak Company, was used to measure the reflectances of the patch on the black plate and the coating on the white plate. Next, the patch on the black glass is removed with a razor blade and weighed on an analytical balance.

The following values represent an example:

R = 79.5

$R\infty$ = 92.0

W = 0.0186 gram/32 cm² or 0.000577 g/cm²

From Table 8, on page 895 of the article by Mitton-Jacobsen above, and given the above values for R and $R\infty$ the scattering power (SW) is found to equal 4.09. The scattering coefficient (S) can then be calculated as follows:

$$S = \frac{Sw}{W} = \frac{4.09}{0.000577 \text{ g/cm}^2} = 7088 \text{ cm}^2/\text{g}$$

## Example 2

A 600 g sample of sorelslag with approximately 70 weight percent $TiO_2$ and approximately 30 weight percent impurities was sandmilled as in Example 1. The steelshot-ground suspension contained 57 percent slag. 175 g of this suspension (=100 g solid slag) was mixed with 67 g anhydrous $Na_2CO_3$, dried, hammermilled and roasted for 2 hours at 1050°C. The hard, roasted material was broken into 3.6 mm bits in mortar and then hammermilled into fine powder which was further sandmilled with glass beads as in Example 1.

The roasted material was dispersed in water and separated centrifugally and washed as in Example 1, and digested in 1000 ml of 6 N HCl for 90 minutes, followed by solids separation and washing as in Example 1. After calcining for 1 hour at 900°C, a white pigment having a rutile structure and a density of 4.10 g/cm³ was obtained. The pigment had a brightness of 78.3 percent and an S of 4,128 cm²/g.

## Example 3

A 600 g sample of hammermilled sorelslag with approximately 70 weight percent $TiO_2$ and approximately 30 weight percent impurities was sandmilled with steelshot as in Example 1. The screened steelshot was washed with water. The wash water was combined with ground slag suspension. With the added water the suspension had a solids content of 45.9 percent.

A 327 g sample of the slag suspension (=150 g solid slag) was mixed with 52.5 g anhydrous NaOH resulting in a slag/NaOH ratio of 100:35. The mixture was evaporated to dryness at 120°C, followed by hammermilling and then roasting for 2 hours at 800°C. Without further sandmilling, the roasted material was dispersed in water and centrifuged. The separated solids were washed with water twice by redispersing in water and recentrifuging. The washed roasted material was then boiled for one hour in 1000 ml 6 N HCl in an open beaker. After digestion in the acid liquor the solids were separated and washed centrifugally two times. The solids were then redispersed in 300 ml water and sandmilled with 700 ml glass beads for 60 minutes at 1000 rpm. After the glass beads were screened out, the white, opaque suspension was mixed with an equal volume of 12 N HCl and boiled for 10 minutes in an open beaker (the final boiling point being about 108°C). The solids were then separated and washed twice with water and dried at 120°C. The solids were then calcined for 1 hour at 900°C. A pigmentary $TiO_2$ having a density of 4.0 g/cm and an iron content of 150 ppm was obtained. The pigment had a brightness of 88.9 percent and an S of 3,760 cm²/g.

## Example 4

A 327 g sample of steelshot ground sorelslag suspension prepared in Example 3 (=150 g solid slag) was mixed with 45 g anhydrous NaOH (the slag/NaOH ratio = 100/30). The mixture was evaporated to dryness at 120°C, followed by hammermilling and roasting as in Example 3. The two digestion steps and other processing steps were also performed as in Example 3. This example was carried out to determine the affect of reducing the amount of NaOH added to the sorelslag material of Example 3 on final pigment properties.

After calcination, the pigmentary $TiO_2$ obtained was buff in color and had an iron content of 8300 ppm. The pigment had a brightness of about 50 percent. The value of S was not determined.

Example 5

A 600 g sample of hammermilled sorelslag with approximately 70 weight percent TiO$_2$ and approximately 30 weight percent impurities was dispersed in 480 g 50 percent NaOH solution (the slag/NaOH ratio = 100/40). The suspension was sandmilled for 150 minutes at 900 rpm with 800 ml steelshot with the sandmill described in Example 1. The sandmilled suspension had solid particles up to about 13 μm in size with the average size being about 7 μm.

After the steelshot was screened from the suspension, the suspension was dried at 120°C, hammermilled and roasted for 2 hours at 850°C.

A 150 g sample of the roasted material was sandmilled with 700 ml glass beads and 350 ml water at 1000 rpm for 10 minutes. After the glass beads were screened out, the solids were separated centrifugally and washed twice. The solids residue formed after centrifugation was then dispersed in 500 ml of 10.8 N HCl and boiled with reflux at 107°C for 25 minutes. The solids were separated from the acid liquor centrifugally and washed once with water. The centrifuged solids were redispersed in 500 ml 7 N HCl and boiled with reflux at 108°C for 30 minutes. The solids were separated from the acid liquor centrifugally and washed three times. The centrifuged solids were dried at 120°C and calcined for 45 minutes at 900°C. A pigmentary TiO$_2$ was obtained with an iron content of 65 ppm. The pigment had a brightness of 90.5 percent and an S of 4,472 cm$^2$/g.

Example 6

A 400 g sample of hammermilled sorelslag with approximately 70 weight percent TiO$_2$ and approximately 30 weight percent impurities was dispersed in 280 ml water and 180 g anhydrous NaOH (the slag/NaOH ratio = 100/45). The suspension was sandmilled for 150 minutes at 1350 rpm with 600 ml of 1.5 mm steelshot with the sandmill described in Example 1.

After screening out the steelshot, the sandmilled suspension was dried at 120°C, hammermilled and roasted for 2 hours at 840°C. A 150 g sample of roasted material was dispersed in 350 ml water and sandmilled with 700 ml of 1.2 mm diameter glass beads for 10 minutes at 1000 rpm. After screening, the glass beads, the suspension was centrifuged and washed twice. The washed centrifuge cake weighed 234 g and contained 96 g water. Thus, the yield of solid roasted material was 138 g. This cake was dispersed in 300 ml water and 605 ml 12 N HCl. The liquid portion resulted in a 7.3 N HCl which after neutralization of solids became 6 N. Digestion with reflux at 108°C lasted 20 minutes. The solids were separated from the acid liquor centrifugally and washed twice, then redispersed in 600 ml 6 N HCl and digested another 20 minutes, followed by centrifugal solids separation and 2 washings. The solids were then dried at 120°C and calcined for 1 hour at 900°C. A TiO$_2$ pigment was produced with an iron content of 30 ppm. The pigment had a brightness of 90.1 percent and an S of 6,170 cm$^2$/g.

Example 7

In this example, the sorelslag/NaOH ratio was changed to 100/50 and processed as follows:

A 600 g sample of hammermilled sorelslag with approximately 70 weight percent TiO$_2$ and approximately 30 weight percent impurities was dispersed in 400 ml of water and sandmilled with 800 ml of 1.5 mm steelshot for 120 minutes at 1800 rpm with the sandmill described in Example 1. The steelshot was removed by screening.

Into 200 grams of this slag suspension, containing 120 g sorelslag, 60 g of anhydrous NaOH was solubilized and dried in a shallow dish in an oven at 120°C. The dried material was hammermilled and roasted for 2 hours at 840°C. The roasted material was dispersed in 350 ml of water and sandmilled with 700 ml of 1.2 mm diameter glass beads for 10 minutes at 1000 rpm. After screening the glass beads, the sandmilled roasted material was vacuum filtered in a 15 cm diameter Buchner funnel with a filter paper having a pore size of about 7 microns made by W&R Bolton, Ltd., England, and sold under the trade name "Whatman Filter Paper No. 541" and washed with about 2 liters of water. The washed roasted material was then digested with reflux in 1000 ml 6 N HCl at 108°C for 20 minutes. Then 7 g of a 1 percent solution of a first flocculating agent was added. The first flocculating agent added was a cationic homopolymer manufactured by The Dow Chemical Company of the type generally described in U.S. Patent No. 3,719,748. The flocculated suspension was vacuum filtered and washed on the filter with 2 liters of water. The filter cake was dispersed in 1000 ml of 6 N HCl at about 30°C and the temperature was gradually raised (within about 20 minutes) to the boiling point of 108°C which was maintained for 20 minutes. Then 1000 ml of cold water and 7 g of a 1 percent solution of a second flocculating agent was added. The second flocculating agent, also manufactured by The Dow Chemical Company, was a slightly anionic homopolymer of acrylamide in solid form with a degree of hydrolysis of from 1 to 5 percent. Viscosity of a 0.5 percent solids in water solution at a pH of 3 and 25°C of the second flocculating agent was in the range of from 31 to 50 centipoise (cp). The flocculated suspension was vacuum filtered and washed with 2 liters of water followed by drying at 120°C. The solids were calcined for 1 hour at 900°C.

Electronmicrographs revealed a nodular or non-acicular shaped pigment. An X-ray diffraction analysis confirmed that the pigment had a rutile structure. S-value was 2408 $cm^2/g$ and the brightness 83.9 percent.

## Example 8

In this example, a titanium bearing material, referred to as "chloride slag" with approximately 85 weight percent $TiO_2$ and approximately 15 weight percent impurities was used to produce a pigmentary $TiO_2$. This material, in granular form, had a particle size of about 840 $\mu$m.

A 400 g sample of this material was mixed with 200 g anhydrous NaOH and 300 ml water. The mixture was sandmilled, using the sandmill described in Example 1, with 700 ml of 1.5 mm steelshot at 1500 rpm for 240 minutes to an average particle size below about 10 $\mu$m. After the steelshot was screened from the sandmilled suspension, the suspension was dried at 120°C, hammermilled and roasted for 2 hours at 840°C.

A 150 g sample of the roasted material was dispersed in 350 ml of water and sandmilled at 1000 rpm with 700 ml glass beads for 10 minutes. The glass beads were screened out from the suspension and then the suspension was centrifuged. The centrifuge cake was washed 4 times. The centrifuged cake was digested in 1000 ml of 6 N HCl for 20 minutes with reflux at 108°C. At the end of the digestion, 5 g of a 1 percent solution of the first flocculating agent described in Example 7, was added to the digested material and the flocculated suspension was vacuum filtered. The filter cake was then washed on the filter with 1000 ml water. The washed filter cake was digested a second time in 1000 ml of 6 N HCl for 20 minutes with reflux at 108°C. After digestion, 5 g of a 1 percent solution of the second flocculating agent described in Example 7, was added to the digested material. The flocculated suspension was then vacuum filtered and washed with 2 liters of water on the filter. The filter cake was then dried at 120°C. The solids were calcined for 1 hour at 900°C. A pigmentary $TiO_2$ was obtained having an S of 5,670 $cm^2/g$ and a brightness of 89.0 percent.

## Example 9

A 500 g sample of hammermilled sorelslag with approximately 78 weight percent $TiO_2$ and approximately 22 weight percent impurities was dispersed in 350 ml water and sandmilled for 180 minutes at 1800 rpm with 800 ml of 1.5 mm steelshot with the sandmill described in Example 1. The peripheral velocity of impellers was 8 m/s.

The ground slag was screened through a 425 $\mu$m screen to remove the steelshot. The steelshot was rinsed with water and the rinse water was combined into the slag grind resulting in a slag suspension having a solids content of 24.5 percent.

Into 612 g of this slag suspension (= 150 g solid slag), 67.5 g anhydrous NaOH was added giving a sorelslag/NaOH ratio of 100/45. The mixture was evaporated to dryness at 120°C in a shallow dish. The dried material was hammermilled to obtain a homogeneous fine powder. The powder was then heated or roasted in a porcelain crucible for 150 minutes at 840°C. Upon cooling, the roasted material was pulverized in a mortar. The roasted material was then dispersed in 350 ml of water and sandmilled for 10 minutes at 1800 rpm in the laboratory sandmill above using 700 ml of 1.2 mm diameter glass beads as grinding media. The sandmilled roasted material was screened free of beads, diluted to 1500 ml with water and vacuum filtered through a 15 cm diameter Buchner funnel using No. 541 Whatman paper. The filter cake, being about 2 cm thick was washed on the filter with about 2 liters of water. Solids content of the filter cake was 62.6 percent.

The washed filter cake was dispersed in 300 ml of water plus 200 ml 12 N HCl. The mixture having a normality of about 4.4 was put into a 2 liter, 4-necked glass flask equipped with a reflux condenser, a thermometer, an agitator and a funnel with a stopcock. The dispersion was heated up to a temperature of 100°C. Thereafter, to raise the acidity to 6 N, 400 ml 12 N HCl was added into the flask. The temperature dropped momentarily to 85°C, however, within 5 minutes the temperature reached 108°C, the boiling point of 6 N HCl. The mixture was boiled for 20 minutes and then diluted with cold water to 2000 ml. Under continued agitation, 7 g of a 1 percent solution of the first flocculating agent, described in Example 7, was added to the mixture.

The mixture now being about 3 N was vacuum filtered. The filter cake was washed on the filter with 2 liters of water. The solids content of the filter cake was 32.5 percent.

The filter cake, weighing 323 g (solids = 105 g), was dispersed in a solution containing 280 ml of water plus 200 ml of 12 N HCl. This mixture was placed in the 4-necked glass flask and heated to 100°C. Thereafter 300 ml of 12 N HCl was added to the mixture. The temperature was raised to 108°C boiling point of 6 N HCl and kept at this temperature for 20 minutes. The mixture was diluted to 2000 ml with cold water. Under continued agitation, 7 g of a 1 percent solution of the second flocculating agent described in Example 7, was added to the mixture. The mixture was filtered and washed the same as after the first digestion.

The filter cake, about 3 cm thick, was dried at 120°C, and thereafter ground in a mortar. The ground cake was calcined for 1 hour at 900°C. The calcined material was immediately placed in a large shallow porcelain dish and cooled at room temperature exposed to air. A pigmentary $TiO_2$ was obtained.

An X-ray diffraction analysis identified the pigment as rutile which had a density of 4.1 $g/cm^3$. The pigment had an S of 6,900 $cm^2/g$ and a brightness of 92.2 percent. The crystal habit was acicular.

Example 10

A $TiO_2$ pigment was produced as in Example 9, except that the sorelslag/NaOH ratio was changed to 100/40 and the NaOH was added to the sorelslag prior to sandmilling rather than after the slag was sandmilled.

The acicularly shaped pigment had an S of 8,900 $cm^2/g$ and a brightness of 91.0 percent.

Example 11

A titanium-bearing material made during the Benilite Cyclic Process from ilmenite by reduction roasting and subsequent HCl acid leaching was used as starting material in this example. This black material had approximately 93 weight percent $TiO_2$ and approximately 7 weight percent impurities and a particle size of about 250 μm.

A 400 g sample of the material was mixed with 200 g NaOH, and 350 ml $H_2O$ and sandmilled with the sandmill described in Example 1 with 600 ml of 1.5 mm steelshot for 90 minutes at 1600 rpm. The sandmilled material contained particles with an average size of below about 10 μm. After the steelshot was screened out, the ground material was dried at 120°C, hammer-milled and roasted for 2 hours at 840°C. A 170 g sample of roasted material was dispersed in 350 ml of water and sandmilled with 700 ml of glass beads at 1600 rpm for 10 minutes. After the beads were screened out, the suspension was centrifuged and the centrifuged cake was washed 2 times with water.

The centrifuged cake was digested with reflux in 1000 ml 6 N HCl for 20 minutes. The solids were separated from the acid liquor and washed centrifugally. A second digestion also in 1000 ml 6 N HCl was carried out followed by centrifugal separation and washing. The solids were dried at 120°C and then calcined for 1 hour at 900°C. An acicularly shaped, pigmentary $TiO_2$ was obtained. The pigment had an S of 4,260 $cm^2/g$ and a brightness of 90.0 percent.

Table I, below, summarizes the examples above excluding Examples 2, 8 and 11.

TABLE I

| Example No. | Ratio of Slag/NaOH | Steelshot Grind (rpm/minutes) | NaOH Present During Initial Grind? | Number of Digestions | Iron content (ppm) | S (cm²/g) | Brightness (percent) |
|---|---|---|---|---|---|---|---|
| 1 | 100/40 | 100/120 | No | 1 | 520 | 6,835 | 88.4 |
| 3 | 100/35 | 100/120 | No | 2 | 150 | 3,760 | 88.9 |
| 4 | 100/30 | 100/120 | No | 2 | 8300 | - | 50.0 |
| 5 | 100/40 | 900/150 | Yes | 2 | 65 | 4,472 | 90.5 |
| 6 | 100/45 | 1350/150 | Yes | 2 | 30 | 6,170 | 90.1 |
| 7 | 100/50 | 1800/120 | No | 2 | - | 2,408 | 83.9 |
| 9 | 100/45 | 1800/180 | No | 2 | - | 6,900 | 92.2 |
| 10 | 100/40 | 1800/180 | Yes | 2 | - | 8,900 | 91.0 |

## Example 12

A sorelslag sample with a particle size of about 74 microns was obtained from QIT-FER ET TITANE, INC., a Canadian company. A 1200 g sample of the sorelslag and 480 g of sodium hydroxide (NaOH) were placed in a laboratory sandmill containing one liter of 1.2 mm in diameter steel shot and about 1,000 ml of water. The mixture was then sandmilled until the maximum particle size (top size) of the sorelslag was 10 microns. The slag/NaOH ratio of the mixture was 100/40 by weight. After the steel shot was screened out, the mixture was dried in an oven at a temperature of 100° C. The dried material was hammermilled to break up the agglomerates formed after drying.

The hammermilled material was then roasted at a temperature of 875° C for two hours. The roasted material was run through a grinder to break up the agglomerates formed after roasting and then the roasted material was sandmilled for five minutes in about 700 ml of water and one liter of 1.2 mm in diameter zirconium oxide beads. After the beads were screened out, the suspension was vacuum filtered and the filter cake was washed with water two times, each wash using about one liter of water.

A 194 g sample of the roasted material on a dry basis was digested in 1,000 ml of 6 N hydrochloric acid (HCl). The digestion step was carried out as follows: The temperature of the 6 N solution (i.e. roasted material/acid mixture) was at room temperature (20° C). Then the temperature was increased slowly at a rate of about 5° C/minute up to the boiling point of the 6 N acid solution and the solution was allowed to reflux for 15 minutes. The amount of water in the wet filter cake was taken into account when the normality of the HCl acid was calculated. A flocculant, 3 g of a 1 percent solution of SEPARAN MG-205 (a trademark of The Dow Chemical Company) was added to the digestion suspension. The suspension was filtered and washed two times with water, each wash using about one liter of water. The filter cake was redispersed in water and digested a second time with 800 ml of 6 N HCl in the same manner as the first digestion. The same amount of flocculant as in the first digestion was added to the suspension. The suspension was then vacuum filtered and washed as in the first digestion. A filter cake was dried at a temperature of 110° C for about three hours. The dried material was then calcined for one hour at a temperature of 900° C. The obtained rutile pigment had a distinctly nodular particle shape.

The dry brightness of the calcined material was measured by packing a portion of the material into a sample vial cap which was about 1.3 cm deep by 2.5 cm inch in diameter and measuring the reflectance of the sample using a Photovolt equipped with a blue filter. The instrument was first calibrated by using a white standard chip of known brightness of 86.9 with the blue filter. The dry brightness of the calcined material of this example was 88.0 percent.

The scattering coefficient of the calcined material was measured by the following procedure:
A 15 g sample of pigment and 1/2 g of sodium tripolyphosphate in 70 g of water was dispersed in a high speed disperser for 5 minutes. Then 3.1 g of a latex sold under the trade name Rhoplex B-100 by Rohm and Haas Co. and 1/2 g of a surfactant sold under the trade name Triton X-100 by Rohm and Haas Co. was added to the dispersion and stirred gently by hand for about 3 minutes. A drawdown coating of the dispersion was applied on a 50 μm thick clear plastic sheet of Mylar (a trademark of E.I. Dupont de Nemours & Co.) with a 37 μm Bird film applicator and placed in an oven and dried at a temperature of 100° C for 3 minutes. A 5 cm by 5 cm square sample of the coated Mylar sheet was weighed and then placed on a 5 cm by 12.5 cm optically flat black glass plate which was coated with propylene glycol. The propylene glycol was used to ensure optical contact. Using a Photovolt the reflectance over the black glass, $R_B$, was measured for the sample. The coating on the 5 x 5 cm Mylar sheet was washed off and the Mylar sheet was dried and then weighed to find the coating weight per unit area, W. A practical approximation to an infinitely opaque coating, $R\infty$, was obtained as follows: A drawdown coating was applied on a sheet of 50 micron Mylar and dried and this step was repeated until a maximum reflectance was reached as measured by the Photovolt. Using the $R_B$, $R\infty$, and W values, a scattering power value, SW, was found by using the Tables in the article Mitton-Jacobsen, "New Graphs for Computing Scattering Coefficient and Hiding Power", Official Digest, September 1963, pages 871-913. The scattering coefficient, S, was then calculated using the formula:

$$S = \frac{SW}{W}$$

In this example the scattering coefficient of the calcined material was 3,336 cm²/g.

The iron content of the calcined material was measured using ionic coupled plasma spectrometry. In this example the iron content of the calcined material was 200 ppm.

## Claims

1. A process for preparing a titanium dioxide pigment comprising the steps of:
   (a) comminuting a titanium dioxide bearing material;
   (b) mixing the titanium dioxide bearing material with an alkali metal compound selected from alkali metal hydroxide, alkali metal carbonate and alkali metal oxide;
   (c) roasting the mixture at a temperature of from 700°C to 900°C;
   (d) digesting the roasted material in hydrochloric acid; and
   (e) calcining the solid product formed in the digestion step at a temperature of from 800°C to 1000°C to form a titanium dioxide pigment.

2. The process of Claim 1, wherein the titanium dioxide bearing material is selected from sorelslag, beneficiated ilmenite and chloride slag, and wherein the alkali metal compound is an alkali metal hydroxide and the ratio of sorelslag to the alkali metal hydroxide is from 100:30 to 100:60 by weight.

3. The process of Claim 1, including the step of sandmilling a mixture of the titanium dioxide bearing material, the alkali metal compound and water to a particle size of less than 15 microns.

4. The process of Claim 3, wherein the titanium dioxide bearing material is sorelslag, and the alkali metal hydroxide is sodium hydroxide, and sandmilling the mixture to a particle size of less than 10 microns

5. The process of Claim 1, 2 or 3, including the step of filtering solubilized material from the roasted mixture following step (c), and filtering the hydrated, amorphous titanium dioxide material from the acid treatment step following step (d).

6. The process of any one of the preceding claims, including the step of sandmilling the roasted mixture of step (c) in water, filtering solubilized material from the roasted mixture, digesting the roasted mixture of step (d) in hydrochloric acid at a temperature of from 90°C to 110°C to form the hydrated, amorphous titanium dioxide material of step (d) from the acid, and washing the titanium dioxide material prior to calcining.

7. The process of any one of the preceding claims, wherein digestion of the roasted material is carried out in from 10 to 120 minutes.

8. The process of any one of the preceding claims, including the step of micronizing the calcined product to an average particle size of about 0.3 microns when the particles are nodularly shaped.

9. The process of any one of Claims 1 to 7, including micronizing the calcined product, when acicularly shaped, to particles being 0.1 to 1.0 μm long and 0.05 to 0.3 μm long.

10. The process of any one of the preceding claims, wherein the titanium dioxide pigment produced after calcination has a brightness ($R\infty$) of from 88 to 94 percent.

11. The process of any one of the preceding claims, wherein the titanium dioxide pigment produced after calcination has a scattering coefficient (S) of from 2000 cm²/g to 9000 cm²/g.

12. The process of any one of the preceding claims, wherein the titanium dioxide pigment produced after calcination has an iron content of from 30 ppm to 600 ppm.

13. The process of Claim 1, including the step of heating the roasted material/acid mixture to its boiling point at a rate sufficient to form a nodular-shaped material.

14. The process of Claim 13, wherein the roasted material/acid solution mixture is heated up to its boiling point temperature of from 90°C to 110°C at a rate of less than 5°C/minute.

15. The process of Claim 1, including the step of heating the roasted material/acid mixture to its boiling point at a rate and an acidity sufficient to form an acicular-shaped material.

16. The process of Claim 15, wherein the acidity of the roasted material/acid mixture is maintained below 4 N during the heating step and increased to 6 N when the temperature has exceeded 90°C.

17. The process of Claim 12 or 13, wherein the titanium dioxide pigment produced after calcining has a scattering coefficient (S) of 1500 to 5000 cm²/g.

18. The process of Claim 12, 13 or 14, wherein the titanium dioxide pigment produced after calcination has an iron content of less than 520 ppm.

19. The process of any one of the preceding claims, wherein the digestion step is carried out at least two times.

# Fig. 1

European Patent
Office

EUROPEAN SEARCH REPORT

Application Number

EP 88 10 0658

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 516 548 (W.J. CAUWENBERG et al.)<br>* Example 1 *<br>--- | 1,5 | C 09 C 1/36<br>C 22 B 34/12<br>C 01 G 23/047 |
| A | US-A-3 069 235 (D.L. SCHECHTER et al.)<br>* Claims 1,2,4,7,8 *<br>--- | 1,2,7,<br>15,16 | |
| A | US-A-3 060 002 (J.J. LEDDY et al.)<br>* Claim 1 *<br>--- | 1,2,7,<br>16 | |
| A | EP-A-0 243 725 (E.I. DU PONT DE NEMOURS AND CO.)<br>* Page 2, lines 3-45; example 1 *<br>----- | 1 | |

TECHNICAL FIELDS
SEARCHED (Int. Cl.4)

C 09 C
C 22 B
C 01 G

The present search report has been drawn up for all claims

| Place of search | Date of completion of the search | Examiner |
|---|---|---|
| THE HAGUE | 24-08-1988 | MINI A.E. |